# EUROPÄISCHE PATENTSCHRIFT

(11) **EP 0 661 500 B1**
(45) Veröffentlichungstag und Bekanntmachung des Hinweises auf die Patenterteilung: **04.06.1997**
(21) Anmeldenummer: 94120438.0
(22) Anmeldetag: 22.12.1994
(51) Int. Cl.: F23N 5/08, F23N 5/00

(54) **Verfahren zum Regeln einzelner oder sämtlicher die Verbrennung auf einem Feuerungsrost beeinflussender Faktoren**
Method of controlling one or more parameters of the combustion on a grate of a furnace
Procédé de réglage d'un ou de plusieurs paramètres de la combustion sur une grille d'un foyer

(30) Priorität: 29.12.1993 DE 4344906
(43) Veröffentlichungstag der Anmeldung: 05.07.1995
(73) Patentinhaber: MARTIN GmbH für Umwelt- und Energietechnik, D-80807 München (DE)
(72) Erfinder: Martin, Johannes, Dip.-Ing., D-81929 München (DE); Horn, Joachim, Dipl.-Ing., D-80636 München (DE); Rampp, Franz, Dipl.-Wirtsch.-Ing., D-80801 München (DE)
(74) Vertreter: Zmyj, Erwin, Dipl.-Ing., Dipl.-Wirtsch.-Ing.

(56) Entgegenhaltungen:
- WO-A-90/09552
- DE-C- 3 825 931
- US-A- 4 737 844
- PATENT ABSTRACTS OF JAPAN vol. 10, no. 326 (M-532) 6. November 1986 & JP-A-61 130 725
- VGB KRAFTWERKSTECHNIK, Bd.73, Nr.7, Juli 1993, Essen, DE, SS 614-618, XP383296; BUSCH, RAMPP, MARTIN UND HORN: 'Entwicklung einer kamerageführten Feuersregelung zur Verbesserung des Verbrennungs-, Ausbrand- und Emissionsverhaltens einer Abfallverbrennungsanlage'

## Beschreibung

Die Erfindung bezieht sich auf ein Verfahren zum Regeln einzelner oder sämtlicher die Verbrennung auf einem Feuerungsrost beeinflussender Faktoren, bei dem die Verteilung der Brennmasse beobachtet und die hieraus sich ergebenden Änderungen der Massenverteilung als Regelgröße zur Beeinflussung verschiedener Faktoren verwendet wird.

Aus Patents Abstracts of Japan, Bd. 10, Nr. 326 (M532) 6/11/86; & JP-A-61-130 725 ist es bekannt mittels einer Videokamera, die unter sehr flachem Winkel auf das Brennbett gerichtet ist, einen Konturenvergleich eines gespeicherten, idealen Brennbettverlaufes mit der jeweils aufgenommenen Brennbettkontur durchzuführen. Bei diesem bildhaften Vergleich ist kein exakter dreidimensionaler Brennbett-Konturenverlauf reproduzierbar, sondern es können jeweils nur entsprechend der Ausrichtung der Videokamera Projektionsflächen ähnlich einem Schattenspiel verglichen werden. Zwangsläufig lassen sich bei einer Projektionsfläche aber nur die jeweils höchsten und niedrigsten Extremwerte ablesen, während eine exakte Aufnahme des tatsächlich vorliegenden Konturenverlaufs des Brennbettes nicht möglich ist.

Aus der DE 38 25 931 C2 ist es bekannt, die Feuerungsleistung von Verbrennungsanlagen dadurch zu regeln, daß das Abbrandverhalten des Brennstoffes auf dem Feuerungsrost mittels einer Infrarotkamera beobachtet wird und die Luftzuführung zonenweise entsprechend der durch die Infrarotkamera festgestellten Temperaturverteilung geregelt wird. Diese Art der Regelung hat zwar gegenüber früheren Verfahren zu wesentlich besseren Ergebnissen geführt, ist aber insofern noch nicht vollkommen, als dieses Verfahren nur die Temperaturerfassung ermöglicht, jedoch keine Rückschlüsse auf die in den einzelnen Zonen durch die Verbrennung freigesetzte Energiemenge gestattet, wodurch die Anpassung der Feuerungsleistung an die Dampfleistungsanforderung nicht feinfühlig und schnell genug erfolgt.

Neben dieser bekannten Regelung des Verbrennungsablaufes auf der Grundlage der Temperaturerfassung zur Erzielung einer bestimmten Feuerungsleistung, ist es bekannt, die Feuerungsleistung in Abhängigkeit von dem im Rauchgas festgestellten Sauerstoffgehalt oder auch in Abhängigkeit vom erzeugten Dampfmassenstrom zu regeln.

Alle diese drei Regelungsmöglichkeiten führen dazu, daß bei einem Absinken des Heizwertes des auf den Feuerrost gelangenden Brenngutes die Neigung besteht, den Feuerrost zu überschütten. Steigt zum Beispiel der Sauerstoffgehalt im Abgas so kann der Regelmechanismus nicht erkennen, ob dies an einem sinkenden Heizwert liegt oder an einem Abnehmen der Menge des aufgegebenen Brenngutes, so daß die Aufgabemenge erhöht wird. Bei der Regelung in Abhängigkeit von der Temperatur und dem Dampfmassenstrom sind die Zusammenhänge derart, daß bei einem Absinken der Rauchgastemperatur und bei einer Abnahme des Dampfmassenstromes die Regeleinrichtung ebenfalls davon ausgeht, daß zu wenig Brennmasse auf den Feuerungsrost gelangt, so daß die Aufgabemenge erhöht wird. Da eine laufende Erfassung des Heizwertes bei Müllverbrennungsanlagen nicht möglich ist, kommt es deshalb manchmal zu Überschüttungen des Feuerungsrostes aufgrund der soeben erläuterten Zusammenhänge.

Aufgabe der Erfindung ist es, ein Verfahren zum Regeln einzelner oder aller den Verbrennungsprozeß beeinflussender Faktoren mit einer verbesserten Erfassung der Brennstoffmassenverteilung zu ermöglichen, um damit die Feuerungsleistung besser an die Dampfleistungsanforderung anpassen zu können. Auch sollen hierdurch entsprechende Beeinflussungen auf die Abgaszusammensetzung, insbesondere im Hinblick auf Stickoxide und andere schädliche Stoffe ermöglicht werden.

Diese Aufgabe wird bei einem Verfahren der eingangs erläuterten Art erfindungsgemäß dadurch gelöst, daß die dreidimensionale Verteilung der Brennmasse auf mindestens einem bevorzugten Bereich des Feuerungsrostes durch Abtasten der Brennstoffmassenkontur mittels Radar festgestellt wird und die gewonnenen Signale als Regelgröße zur Beeinflussung der verschiedenen Faktoren verwendet werden.

Ein solches Abtasten der Brennstoffmassenkontur ist durch Radar in besonders exakter Weise möglich, weshalb man eine besonders exakte Regelgröße erhält, da diese nicht ein Differenzbild einer vorgegebenen Projektionsfläche und einer durch eine Videokamera erfaßten Projektionsfläche, sondern die exakte Kontur wiedergibt. Durch diese Maßnahme ist es unabhängig von der verwendeten Leitgröße zur Regelung des Verbrennungsablaufes, d.h. unabhängig davon, ob man den Verbrennungsablauf in Abhängigkeit von der Temperatur im Rauchgas, in Abhängigkeit von der Sauerstoffzusammensetzung des Rauchgases oder in Abhängigkeit vom Dampfmassenstrom regelt, möglich, Rückschlüsse auf die durch die Verbrennung freigesetzte Energie abzuleiten. Selbstverständlich wird die Regelungsmöglichkeit umso genauer je größer der Bereich des Feuerungsrostes ist, dessen dreidimensionale Massenverteilung des Brennstoffes überwacht wird. Wird beispielsweise nur ein ganz eng begrenzter Bereich unmittelbar nach der Aufgabe des Brenngutes hinsichtlich der dreidimensionalen Verteilung der Brennstoffmasse überwacht, so dient das erfindungsgemäße Verfahren im wesentlichen als "Notbremse" dafür, daß der Rost bei einem Absinken des Heizwertes nicht überschüttet wird, was zwangsläufig zu einem Absinken der Feuerungsleistung führt. Wird dagegen im anderen Extremfall der gesamte Feuerungsrost überwacht und die dreidimensionale Massenverteilung auf dem gesamten Rost erfaßt, so ist es möglich, die einzelnen, den Verbrennungsprozeß beeinflussenden Faktoren so zu regeln, daß eine möglichst gleichmäßige Feuerungsleistung in Querrichtung des Rostes und ein möglichst idealer Verbrennungsablauf in Längsrichtung des Feuerungsrostes einstellbar ist. Hierdurch kann die notwendige Feuerungsleistung an die gewünschte Dampfleistung möglichst exakt angepaßt werden.

Eine vorteilhafte Verbesserung des erfindungsgemäßen Verfahrens erhält man dadurch, daß die Temperaturverteilung der auf dem Feuerungsrost befindlichen Brennstoffmasse erfaßt wird. Die Erfassung der Temperaturverteilung und die Erfassung der Massenverteilung läßt nämlich sehr genaue Rückschlüsse auf den Verbrennungsablauf und insbesondere auf die örtlich freigesetzte Energiemenge zu, so daß entsprechende Regelungsmaßnahmen bezüglich der den Verbrennungsprozeß beeinflußender Faktoren möglich ist.

In vorteilhafter Weise kann die Temperaturverteilung durch mindestens eine auf das Brennbett ausgerichtete Infrarotkamera festgestellt werden. Durch eine an sich bekannte Infrarotkamera läßt sich das Abbrandverhalten, also in erster Linie die Strahlung der glühenden Brennstoffmasse feststellen, wodurch man die eine der wesentlichen Komponenten für die Beurteilung des Verbrennungsablaufes erhält.

Durch die Kombination der Erfassung der Brennstoffmassenkontur mit der Erfassung der örtlich herrschenden Temperatur der Brennstoffmasse erhält man die beiden wesentlichen Komponenten, die eine genaue Aussage über die örtlich freigegebene Energiemenge zulassen, wodurch entsprechende Maßnahmen zur Verbesserung oder zur Dämpfung des örtlich herrschenden Verbrennungsablaufes eingeleitet werden können.

Die einzelnen den Verbrennungsprozeß beeinflussenden Faktoren sind die Luftmenge und zwar die gesamte Luftmenge, die dem Verbrennungsprozeß zugeführt wird, die Luftmengenverteilung bezüglich Primärluftanteil und Sekundärluftanteil, die Zusammensetzung der Verbrennungsluft, die durch Beimischung von Sauerstoff oder durch Rauchgasrückführung in ihrer Sauerstoffkonzentration verändert werden kann, die Temperatur der Luftvorwärmung, die Aufgabemenge des Brennstoffes, die Aufgabemenge bezogen auf verschiedene Längsbahnen des Feuerungsrostes, die Schürgeschwindigkeit des gesamten Feuerungsrostes, die örtliche Schürgeschwindigkeit des Feuerungsrostes, die Schürgeschwindigkeit unterschiedlicher Rostbahnen und die Arbeitsgeschwindigkeit der am Rostende vorgesehenen Schlackenabwurfvorrichtung.

Alle diese Faktoren, deren Aufzählung nicht als abschließend betrachtet werden muß, können einzeln oder in ihrer Gesamtheit durch die grundlegende Maßnahme nach Anspruch 1 und in besonders vorteilhafter Weise in Verbindung mit der Maßnahme nach Anspruch 2 der Erfindung, nämlich durch die Erfassung der dreidimensionalen Verteilung der Brennstoffmasse und durch die Erfassung der Temperaturverteilung im gewünschten Sinne beeinflußt werden. Sofern aus Kostengründen auf eine besonders gute Optimierung verzichtet werden muß, so kommt vorrangig die Erfassung der dreidimensionalen Verteilung der Brennstoffmasse zur Anwendung.

Die Erfindung wird nachstehend an Hand eines in der Zeichnung dargestellten Beispieles einer Feuerungsanlage, einer schematischen

Zusammenstellung der verschiedenen gegenseitig sich beeinflussender Faktoren und eines schematischen Beispieles der Kombination verschiedener Regelgrößen näher erläutert. In der Zeichnung zeigen:
- **Figur 1:**: einen Vertikalschnitt durch eine schematisch dargestellte Feuerungsanlage;
- **Figur 2:**: ein Diagramm der Brennbetthöhe bezogen auf die Breite und Länge des Feuerungsrostes;
- **Figur 3:**: eine Momentaufnahme mittels einer Infrarotkamera, die die Temperaturverteilung des Brennstoffbettes zeigt;
- **Figur 4:**: eine schematische Darstellung der Erfassung von Meßgrößen und deren physikalisch-technischen Abhängigkeiten; und
- **Figur 5:**: ein Regelschema für eine Feuerungsanlage.

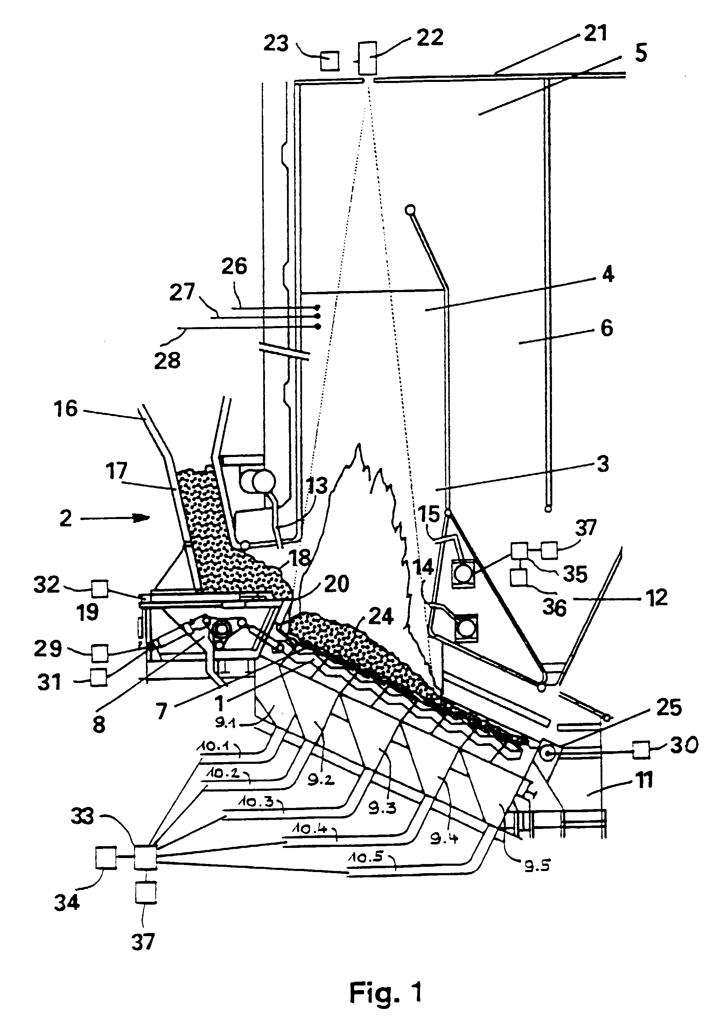

Die in Figur 1 dargestellte Feuerungsanlage umfaßt einen Feuerungsrost 1, eine Beschickeinrichtung 2, einen Feuerraum 3 mit anschließendem Gaszug 4 und einem Umkehrraum 5 in welchem die Abgase in einem nach abwärts gerichteten Gaszug 6 geleitet werden, von dem aus sie in die üblichen einer Feuerungsanlage nachgeschalteten Aggregate, insbesondere Dampferzeuger und Abgasreinigungsanlagen, gelangen.

Der Feuerungsrost 1 umfaßt einzelne Roststufen 7, die wiederum aus einzelnen nebeneinander liegenden Roststäben gebildet sind. Jede zweite Roststufe des als Rückschubrost ausgebildeten Feuerungsrostes ist mit einem insgesamt mit 8 bezeichneten Antrieb verbunden, der es gestattet die Schürgeschwindigkeit einzustellen. Unterhalb des Feuerungsrostes 1 sind sowohl in Längsrichtung als auch in Querrichtung unterteilte Unterwindkammern 9.1 bis 9.5 vorgesehen, die getrennt über Einzelleitungen 10.1 bis 10.5 mit Primärluft beaufschlagt werden. Am Ende des Feuerungsrostes fällt die ausgebrannte Schlacke über eine Schlackenwalze 25 in einen Schlackenfallschacht 11, in welchen gegebenenfalls auch die schwereren im unteren Umkehrraum 12 aus dem Abgas abgeschiedene Feststoffteile gelangen.

In den Feuerraum 3 sind meherere Reihen von Sekundärluftdüsen 13, 14 und 15 ausgerichtet, die für eine geregelte Verbrennung der brennbaren Gase und der in der Schwebe befindlicher Brennstoffteile sorgen.

Diese Sekundärluftdüsenreihen sind getrennt regelbar, da über den Feuerraum verteilt, unterschiedliche Bedingungen herrschen.

Die Beschickeinrichtung 2 umfaßt einen Aufgabetrichter 16, eine Aufgabeschurre 17, einen Aufgabetisch 18 und einen oder mehrere nebeneinander liegende, gegebenenfalls unabhängig voneinander regelbare Beschickkolben 19, die den in der Aufgabeschurre 17 herabfallenden Müll über die Beschickkante 20 des Aufgabetisches 18 in den Feuerraum auf den Feuerungsrost 1 schieben.

In der Decke 21, die den oberen Umkehrraum 5 abschließt, sind eine Radarmeßeinrichtung 22 und eine Infrarotkamera 23 montiert. Mit Hilfe der Radarmeßeinrichtung ist es möglich die dreidimensionale Verteilung des Brennstoffes auf dem Feuerungsrost festzustellen, während durch die Infrarotkamera 23 die Temperaturverteilung der auf dem Feuerungsrost im Abbrand befindlichen Brennstoffmasse aufgezeigt wird. Hierbei handelt es sich um die Temperaturverteilung der auf dem Feuerungsrost liegenden Brennstoffmasse und nicht diejenige der Rauchgase. Durch diese Infrarotkamera ist also das Abbrandverhalten der auf dem Feuerungsrost liegenden Brennstoffmasse erfaßbar.

Der auf den Feuerungsrost aufgeschüttete Brennstoff 24 wird durch die Unterwindzone 9.1 vorgetrocknet und durch die im Feuerraum herrschende Strahlung erwärmt und gezündet. Im Bereich der Unterwindzonen 9.2 und 9.3 ist die Hauptbrandzone während im Bereich der Unterwindzonen 9.4 und 9.5. die sich bildende Schlacke ausbrennt und dann in den Schlackenfallschacht gelangt. Die vom Brennbett aufsteigenden Gase enthalten noch brennbare Anteile, die durch Zuführung von Luft durch die Sekundärluftdüsenreihen 13 bis 15 vollständig verbrannt werden. Die Regelung der Aufgabemenge, der Primärluftmengen in den einzelnen Zonen und deren Zusammensetzung hinsichtlich des Sauerstoffgehaltes sowie die Sekundärluftmengen und deren Zusammensetzung bezüglich des Sauerstoffgehaltes werden in Abhängigkeit von Abbrandverhalten, welches vom Heizwert des Brennstoffes abhängt und bei Müll großen Schwankungen unterworfen ist, geregelt, wobei zur Erfassung der notwendigen Regelgrößen die Radarmeßeinrichtung 22 und die Infrarotkamera 23 dienen. Selbstverständlich können noch Meßeinrichtungen zur Erfassung des Sauerstoffgehaltes 27 im Abgas, zur Feststellung der Temperatur 26 im Abgas und zur Feststellung des Kohlenoxidgehaltes 28 im Abgas neben weiteren Einrichtungen, beispielsweise zur Messung des Stickoxidgehaltes vorgesehen sein. Eine weitere Meßwerterfassungen kann auch für die Roststabtemperatur vorgesehen sein.

In schematischer Form sind verschiedene Stelleinrichtungen in Figur 1 angedeutet, die für die Beeinflussung der Rostgeschwindigkeit mit 29, für die Beeinflussung der Drehzahl der Schlackenwalze mit 30, für die Beeinflussung der Rostgeschwindigkeiten bezüglich verschiedener Bahnen mit 31, für die Ein- und Ausschaltfrequenz bzw. die Geschwindigkeit der Beschickkolben mit 32, für die Primärluftmenge mit 33, für die Zusammensetzung der Primärluft hinsichtlich des Sauerstoffgehaltes mit 34, für die Sekundärluftmenge mit 35, für die Zusammensetzung der Sekundärluft hinsichtlich des Sauerstoffgehaltes mit 36 und die Temperatur des Luftvorwärmers sowohl für die Primärluft als auch für die Sekundärluft mit 37 bezeichnet sind.

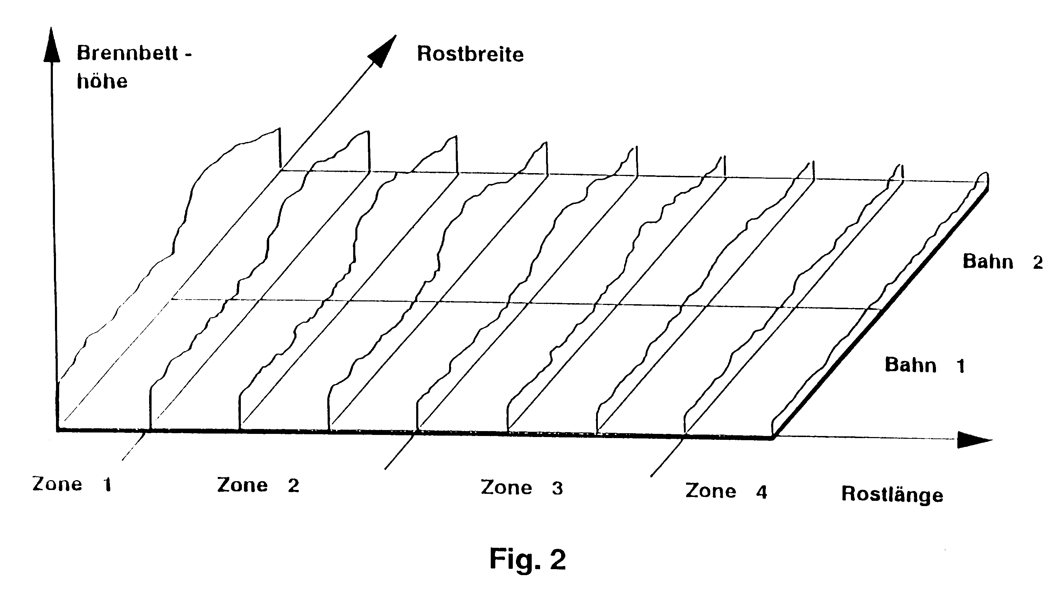

Nachfolgend wird unter zusätzlicher Bezugnahme auf die Figuren 2 bis 5 das erfindungsgemäße Verfahren erläutert.

Je nach Auslegung der Radarmeßeinrichtung 22 kann entweder nur der der Unterwindzone 9.2 zugeordnete Bereich oder der gesamte Rostbereich überwacht und die dreidimensionale Massenverteilung des Brennstoffes erfaßt und aufgezeichnet werden, wie dies aus Figur 2 hervorgeht. Durch die Radarmeßeinrichtung 22 erhält man bei entsprechender hochwertiger Ausgestaltung derselben, beispielsweise für vier Zonen die dreidimensionale Verteilung der Brennstoffmasse und kann in Abhängigkeit von der Brennbetthöhe darauf schließen, ob eine Überschüttung, insbesondere in den vorderen Zonen des Feuerungsrostes vorliegt. Weiterhin ist selbstverständlich auch feststellbar, ob eine Schieflage des Brennbettes vorliegt, was beispielsweise aus Figur 2 durch die höhere Schichtdicke des Brennstoffes auf der Bahn 2 gegenüber der Schichtdicke des Brennstoffes auf Bahn 1 des Feuerungsrostes hervorgeht. Aus diesen Meßgrößen, also Schichtdicke, Schieflage des Brennbettes, Überschüttung des Feuerungsrostes können die Stellgrößen für die Schürgeschwindigkeiten des Rostes, die unterschiedlichen Schürgeschwindigkeiten für Bahn 1 und Bahn 2 und die Frequenz bzw. Geschwindigkeit der einzelnen Beschickkolben 19 abgeleitet werden. Weiterhin kann auch die Geschwindigkeit der in Figur 1 mit 25 bezeichneten Schlackenwalze geregelt werden, die je nach Drehzahl für einen schnelleren oder langsameren Abtransport der Schlacke sorgt. Ist beispielsweise die Schichtdicke der Brennstoffmasse über den Zonen 1 bis 4 entsprechend Figur 2 insgesamt zu hoch, so wird in Verbindung mit anderen Maßnahmen, beispielsweise neben der Erhöhung der Primärluftmenge die Schürgeschwindigkeit und die Drehzahl der Schlackenwalze gesteigert, um diese Überschüttung des Rostes wieder abzubauen. Bei einer Schieflage des Brennbettes wie sie ebenfalls aus Figur 2 durch die höhere Anhäufung auf Bahn 2 gegenüber Bahn 1 hervorgeht, wird die Aufgabemenge für Bahn 2 gegenüber derjenigen für die Bahn 1 verringert. Die Messung der Schichtdicke allein, insbesondere, wenn sie nur für den vorderen Rostbereich vorgenommen wird, dient zur Vermeidung einer Überschüttung des Rostes, da aus dieser gewonnen Stellgröße die Beschickeinrichtung, die Schürgeschwindigkeit des Rostes und die Umdrehungszahl der Schlackenwalze entsprechend eingestellt werden können.

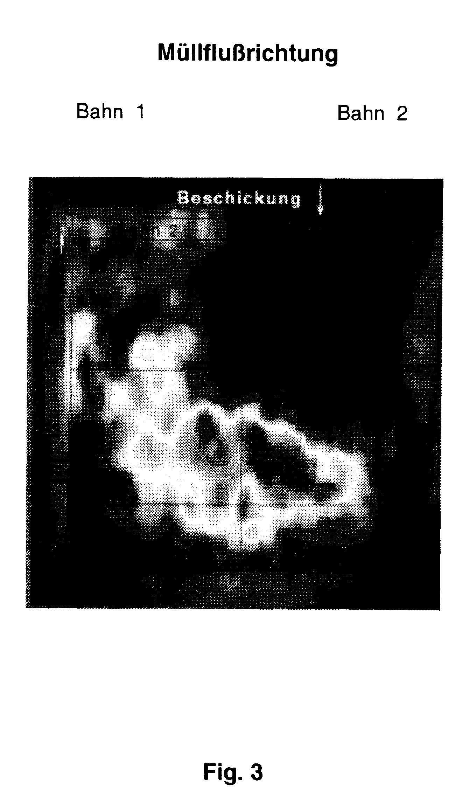

In Verbindung mit der Infrarotkamera 23 erhält man entsprechend Figur 3 einen Überblick über das Abbrandverhalten, wobei die helleren Bereiche in Figur 3 auf ein intensiveres Abbrandverhalten gegenüber den dunkleren Bereichen schließen lassen. Die Aufnahme mittels der Infrarotkamera 23, die in Figur 3 gezeigt ist, läßt erkennen, daß auf Bahn 1 ein intensiveres Abbrandverhalten vorliegt, was sich bei Betrachtung von Figur 2 damit erklären läßt, daß auf Bahn 1 eine geringere Brennbetthöhe vorliegt. Somit gewinnt man eine Stellgröße dafür, daß man auf Bahn 2 die Beschickmenge drosselt und die Primärluftzuführung hinsichtlich der Menge und ggf. auch hinsichtlich des Sauerstoffgehaltes erhöht, um auf dieser Bahn ebenfalls ein gutes Abbrandverhalten zu erzielen. Aus der Kombination der Erkenntnisse entsprechend Figur 2 und Figur 3 kann man auch auf die Feuchtigkeit des aufgegebenen Mülls schließen, denn wenn durch die Radarmessung eine geringere Brennbetthöhe festgestellt wird und gleichzeitig durch die Infrarotkamera an dieser Stelle ein dunklerer Bereich registriert wird, was auf ein schlechtes Abbrandverhalten schließen läßt, so erhält man die Erkenntnis, daß hier trotz geringerer Brennbetthöhe das Abbrandverhalten nicht den vorgegebenen Richtwerten entspricht, was auf einen feuchten Müll oder auf einen Müll mit vielen unbrennbaren Bestandteilen schließen läßt. Die unbrennbaren Bestandteile im Müll dämpfen das Abbrandverhalten ebenso wie ein hoher Wassergehalt, da diese Bestandteile durch die freigesetzte Energie der brennbaren Teile aufgeheizt werden müssen.

Mittels einer weiteren Radarmessung ist es auch möglich die Staubkonzentration im Abgas und die Partikelgeschwindigkeit festzustellen, woraus man auf die örtliche Strömungsgeschwindigkeit der Gase schließen kann. Hierdurch erhält man gegebenenfalls eine zusätzliche Stellgröße für die Beeinflussung der zugeführten Primärluft und/oder der zugeführten Sekundärluft.

Kombiniert man die erhaltenen Stellgrößen aus der Radarmessung und der Überwachung mittels der Infrarotkamera, so kann man aus der Brennbetthöhe, d.h. der Schichtdicke des Brennstoffes in den einzelnen Zonen 1 bis 4 aus der eventuellen Schieflage des Brennbettes, aus der Überschüttung des Feuerungsrostes, aus der Feuchtigkeit des aufgegebenen Mülls, aus der Staubkonzentration im Abgas und der Partikelgeschwindigkeit im Abgas in Verbindung mit den festgestellten Helligkeitswerten, die sich aus der Infrarotkameraaufnahme ergeben, die Beschickungsmenge und der Verteilung auf die einzelnen Bahnen, die Rostgeschwindigkeit, die Verweilzeit des Brenngutes auf dem Rost, die sich aus der Kombination der Rostgeschwindigkeit und der Geschwindigkeit der Schlackenwalze ergibt, die Temperatur der zugeführten Verbrennungsluft sowohl in Form der Primärluft als auch der Sekundärluft, die Luftüberschußmenge und die Zusammensetzung der Verbrennungsluft hinsichtlich des Sauerstoffgehaltes und die Verteilung sowohl der Primärluftmenge als auch der Sekundärluftmenge über die Rostlänge und Rostbreite hinsichtlich der Primärluft und hinsichtlich der Sekundärluftverteilung über den Feuerraum regeln.

Zusätzliche Eingriffsmöglichkeiten erhält man durch die Messung des Sauerstoffgehaltes im Abgas, der Feuerraumtemperatur und des CO-Gehaltes im Abgas. Steigt beispielsweise der Sauerstoffgehalt im Abgas, so wird man in erster Linie auf eine Verschiebung des Verhältnisses von Brennstoff zur Verbrennungsluftmenge und damit auf einen Luftüberschuß schließen können. Es kann aber auch der Fall sein, daß bei genügend großer Brennstoffmenge, die sich aus der Radarmessung ergibt, auf einen zu geringen Anteil an brennbaren Stoffen im Müll geschlossen werden kann. Sinkt beispielsweise die Temperatur im Feuerraum, so kann hierfür ein schlechtes Ausbrandverhalten infolge von Überschüttung und zu hoher Feuchtigkeit des Mülls die Ursache sein. Um hier eine genauere Aussage treffen zu können, kann man die Meßwerte aus der Radarmeßeinrichtung und derjenigen der Infrarotkamera vergleichen, um dann die richtigen Schlüsse für den entsprechenden Regeleingriff zu ziehen. Eine weitere Meßgröße zur Beeinflussung des Regelungsablaufes ist beispielsweise die Roststabtemperatur. Steigt beispielsweise die stabtemperatur über ein zulässiges Maß, so ist entweder die Schichthöhe des im intensiven Abbrand befindlichen Brenngutes auf dem Rost zu gering, so daß eine direkte Wärmeeinstrahlung auf den Roststab erfolgt oder der Sauerstoffanteil in der Verbrennungsluft ist zu hoch, da hierdurch die Verbrennung besonders stark angefacht wird. Es kann aber auch eine zu geringe Beschickung vorliegen oder es kann auch eine zu geringe Umwälzung des auf dem Rost befindlichen Brennstoffes vorliegen. Durch die mittels der Radarmeßeinrichtung und der Infrarotkamera erhaltenen Meßgrößen läßt sich dann auf die wahre Ursache dieser zu hohen Roststabtemperatur schließen, worauf die entsprechenden Maßnahmen, beispielsweise Drosselung der Luftzufuhr, Absenkung des Sauerstoffgehaltes, Erhöhung der Aufgabemenge, Erniedrigung der Schürgeschwindigkeit usw. eingeleitet werden können.

Steigt beispielsweise der CO-Gehalt im Abgas, so kann dies ebenfalls mehrere Ursachen haben, die man mit den bisherigen Meßmethoden nicht immer korrekt einordnen konnte. Steigt also der CO-Gehalt, so kann hierfür als Ursache eine zu geringe Primärluftmenge, ein zu geringer Sauerstoffgehalt in der Primärluft eine Überschüttung des Rostes mit Brenngut oder eine zu hohe Feuchtigkeit der Brennstoffmasse in Frage kommen. Durch die Kombination der Radarmessung mit den Messungen der Infrarotkamera lassen sich die Ursachen wesentlich enger eingrenzen und die entsprechenden Regelungsmaßnahmen wirkungsvoller einleiten, da man mit diesen beiden Meßmöglichkeiten die Brennbetthöhe, die Staubkonzentration, die Partikelgeschwindigkeit und das Abbrandverhalten erfassen kann, so daß man aus diesen Meßgrößen feststellen kann, ob der zu hohe CO-Gehalt durch Erhöhung der Primärluftmenge, durch Erhöhung des Sauerstoffgehaltes, durch eine Verringerung der Aufgabemenge usw. wieder auf den vorgegebenen Sollwert zurückführen kann.

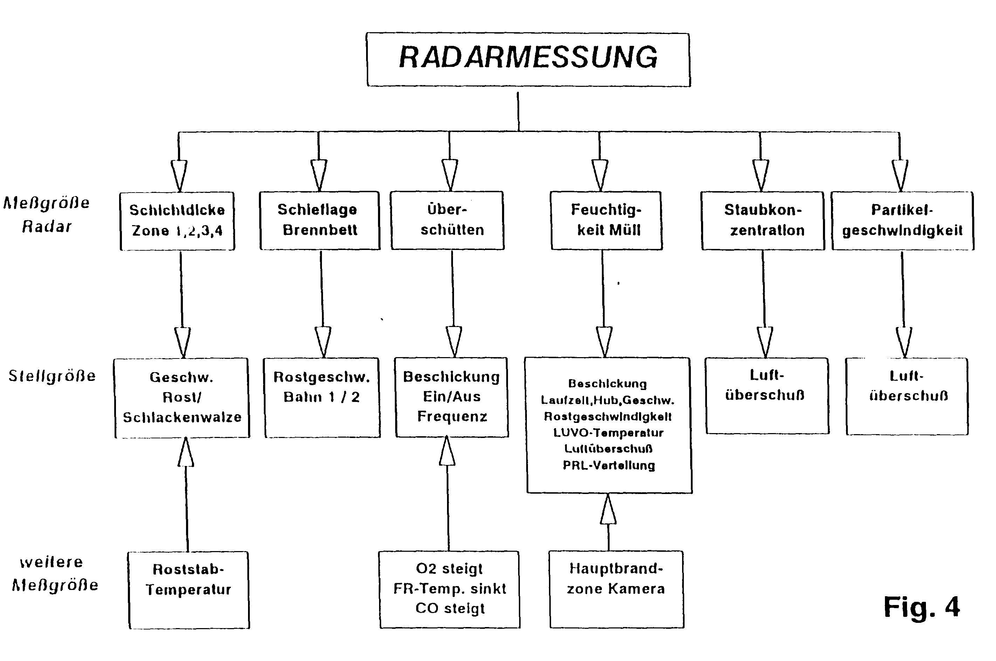

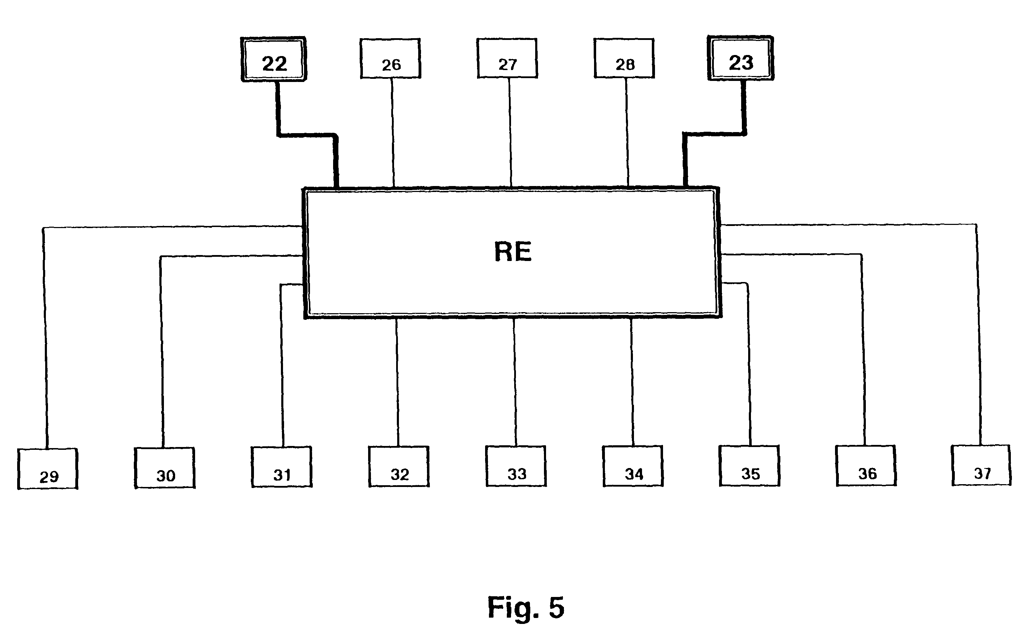

Während aus Figur 4 die physikalisch-technischen Zusammenhänge der einzelnen Meßgrößen und ihre Rückschlußmöglichkeiten bezüglich der Verbrennungsführung auf dem Feuerungsrost hervorgehen, ist in Figur 5 das grundsätzliche Regelschema dargestellt. Danach empfängt eine Regeleinheit RE die Meßwerte aus der Radarmeßeinrichtung 22 und der Infrarotkamera 23, wertet diese Meßgrößen aus und gibt entsprechende Stellgrößen für die einzelnen Einrichtungen weiter, die zur Beeinflussung des Verbrennungsablaufes auf dem Feuerungsrost und damit zur Anpassung der Feuerungsleistung an die Dampfleistungsanforderung dienen.

Wie dies bereits aus der obigen Beschreibung hervorgeht, kann diese Regeleinheit RE auch noch zusätzliche Meßwerte über die Feuerraumtemperatur 26, den Sauerstoffgehalt im Abgas 27 und den CO-Gehalt im Abgas 28 erhalten, um die aus der Radarmeßeinrichtung 22 und der Infrarotkamera 23 erhaltenen Informationen bezüglich der auszugebenden Stellgrößen noch zu verfeinern.

Wie aus Figur 5 ersichtlich, können durch die Regeleinheit RE die Stelleinrichtungen für die Rostgeschwindigkeit 29, d.h. die Schürgeschwindigkeit des Rostes, die Drehzahl der Schlackenwalze 30, die Rostgeschwindigkeiten bezüglich verschiedener Bahnen 31, die Einund Ausschaltfrequenz bzw. die Arbeitsfrequenz der Beschickkolben 32, die Primärluftmenge 33, die Zusammensetzung der Primärluft hinsichtlich des Sauerstoffgehaltes 34, die Sekundärluftmenge 35, die Zusammensetzung der Sekundärluft hinsichtlich des Sauerstoffgehaltes 36 und die Temperatur im Luftvorwärmer 37 sowohl für die Primärluft als auch für die Sekundärluft beeinflußt werden.

## Patentansprüche

1. Verfahren zum Regeln einzelner oder sämtlicher die Verbrennung auf einem Feuerungsrost beeinflussender Faktoren, bei dem die Verteilung der Brennmasse beobachtet und die hieraus sich ergebenden Änderungen der Massenverteilung als Regelgröße zur Beeinflussung verschiedener Faktoren verwendet wird, **dadurch gekennzeichnet**, daß die dreidimensionalen Verteilung der Brennmasse auf mindestens einem bevorzugten Bereich des Feuerungsrostes durch Abtasten der Brennstoffmassenkontur mittels Radar festgestellt wird und die gewonnenen Signale als Regelgröße zur Beeinflussung der verschiedenen Faktoren verwendet werden.

2. Verfahren nach Anspruch 1, **dadurch gekennzeichnet**, daß die Temperaturverteilung der auf dem Feuerungsrost befindlichen Brennstoffmasse erfaßt wird.

3. Verfahren nach Anspruch 2, **dadurch gekennzeichnet**, daß die Temperaturverteilung durch mindestens eine auf das Brennstoffbett ausgerichtete Infrarotkamera festgestellt wird.

4. Verfahren nach einem der Ansprüche 1 bis 3, **dadurch gekennzeichnet**, daß einer der zu regelnden Faktoren die dem Verbrennungsprozeß zugeführte Gesamtluftmenge ist.

5. Verfahren nach einem der Ansprüche 1 bis 4, **dadurch gekennzeichnet**, daß einer der Faktoren die Luftmengenverteilung bei der Primärluft ist.

6. Verfahren nach einem der Ansprüche 1 bis 5, **dadurch gekennzeichnet**, daß einer der Faktoren die Luftmengenverteilung bei der Sekundärluft ist.

7. Verfahren nach einem der Ansprüche 1 bis 6, **dadurch gekennzeichnet**, daß einer der Faktoren die Sauerstofkonzentration der Primärluft ist.

8. Verfahren nach einem der Ansprüche 1 bis 7, **dadurch gekennzeichnet**, daß einer der Faktoren die Sauerstoffkonzentration der Sekundärluft ist.

9. Verfahren nach einem der Ansprüche 1 bis 8, **dadurch gekennzeichnet**, daß einer der Faktoren die Temperatur der Verbrennungsluftvorwärmung der Primärluft und/oder der Sekundärluft ist.

10. Verfahren nach einem der Ansprüche 1 bis 9, **dadurch gekennzeichnet**, daß einer der Faktoren die Menge des rückgeführten Rauchgases bei der Primärluft und/oder bei der Sekundärluft ist.

11. Verfahren nach einem der Ansprüche 1 bis 10, **dadurch gekennzeichnet**, daß einer der Faktoren die Brennstoffaufgabemenge ist.

12. Verfahren nach einem der Ansprüche 1 bis 11, **dadurch gekennzeichnet**, daß einer der Faktoren die Brennstoffaufgabemenge bezogen auf verschiedene Längsbahnen des Feuerungsrostes ist.

13. Verfahren nach einem der Ansprüche 1 bis 12, **dadurch gekennzeichnet**, daß einer der Faktoren die Schürgeschwindigkeit des gesamten Feuerungsrostes ist.

14. Verfahren nach einem der Ansprüche 1 bis 13, **dadurch gekennzeichnet**, daß einer der Faktoren die örtliche Schürgeschwindigkeit des Feuerungsrostes ist.

15. Verfahren nach einem der Ansprüche 1 bis 14, **dadurch gekennzeichnet**, daß einer der Faktoren die unterschiedliche Schürgeschwindigkeit der verschiedenen Rostbahnen ist.

## Claims

1. Method of regulating individual or all the parameters influencing combustion on a furnace grate, in which the distribution of the combustible mass is observed, and the alterations in mass distribution arising therefrom are used as a regulating variable in order to influence various parameters, characterised in that the three-dimensional distribution of the combustible mass is ascertained on at least one preferred area of the furnace grate by scanning the contour of the combustible mass by means of radar, and the signals obtained are used as a regulating variable for influencing the various parameters.

2. Method according to claim 1, characterised in that the temperature distribution of the combustible mass located on the furnace grate is determined.

3. Method according to claim 2, characterised in that the temperature distribution is ascertained by at least one infrared camera aligned on to the fuel bed.

4. Method according to one of claims 1 to 3, characterised in that one of the parameters to be regulated is the overall quantity of air passed into the combustion process.

5. Method according to one of claims 1 to 4, characterised in that one of the parameters is the distribution of air quantity in the primary air.

6. Method according to one of claims 1 to 5, characterised in that one of the parameters is the distribution of air quantity in the secondary air.

7. Method according to one of claims 1 to 6, characterised in that one of the parameters is the oxygen concentration in the primary air.

8. Method according to one of claims 1 to 7, characterised in that one of the parameters is the oxygen concentration in the secondary air.

9. Method according to one of claims 1 to 8, characterised in that one of the parameters is the temperature of the pre-heating of combustion air in the primary and/or secondary air.

10. Method according to one of claims 1 to 9, characterised in that one of the parameters is the quantity of recirculated flue gas in the primary air and/or in the secondary air.

11. Method according to one of claims 1 to 10, characterised in that one of the parameters is the fuel charge quantity.

12. Method according to one of claims 1 to 11, characterised in that one of the parameters is the fuel charge quantity with respect to various longitudinal tracks of the furnace grate.

13. Method according to one of claims 1 to 12, characterised in that one of the parameters is the stoking speed of the overall furnace grate.

14. Method according to one of claims 1 to 13, characterised in that one of the parameters is the local stoking speed of the furnace grate.

15. Method according to one of claims 1 to 14, characterised in that one of the parameters is the varying stoking speed of the various grate tracks.

## Revendications

1. Procédé pour le réglage d'un facteur isolé ou de tous les facteurs influençant la combustion sur une grille de foyer, procédé en relation avec lequel la répartition de la masse de combustion est observée et les variations de la répartition de la masse qui en découlent sont utilisées comme grandeur de réglage pour influencer divers facteurs, caractérisé en ce que la répartition tridimensionnelle de la masse de combustion sur au moins un domaine préféré de la grille de foyer est constatée par balayage du contour de la masse du combustible au moyen d'un radar et que les signaux recueillis sont utilisés comme grandeur de réglage pour influencer les différents facteurs.

2. Procédé suivant la revendication 1, caractérisé en ce que la répartition de la température de la masse du combustible se trouvant sur la grille de foyer est saisie.

3. Procédé suivant la revendication 2, caractérisé en ce que la répartition de la température est détectée par au moins une caméra à infrarouge pointée sur le lit du combustible.

4. Procédé suivant l'une des revendications 1 à 3, caractérisé en ce que l'un des facteurs à régler est le volume total d'air amené au procédé de combustion.

5. Procédé suivant l'une des revendications 1 à 4, caractérisé en ce que l'un des facteurs est la répartition du volume de l'air pour l'air primaire.

6. Procédé suivant l'une des revendications 1 à 5, caractérisé en ce que l'un des facteurs est la répartition du volume de l'air pour l'air secondaire.

7. Procédé suivant l'une des revendications 1 à 6, caractérisé en ce que l'un des facteurs est la concentration en oxygène de l'air primaire.

8. Procédé suivant l'une des revendications 1 à 7, caractérisé en ce que l'un des facteurs est la concentration en oxygène de l'air secondaire.

9. Procédé suivant l'une des revendications 1 à 8, caractérisé en ce que l'un des facteurs est la température du préchauffage de l'air de combustion, primaire et/ou secondaire.

10. Procédé suivant l'une des revendications 1 à 9, caractérisé en ce que l'un des facteurs est le volume du gaz de fumée recyclé avec l'air primaire et/ou avec l'air secondaire.

11. Procédé suivant l'une des revendications 1 à 10, caractérisé en ce que l'un des facteurs est la quantité enfournée de combustible.

12. Procédé suivant l'une des revendications 1 à 11, caractérisé en ce que l'un des facteurs est la quantité enfournée de combustible rapportée aux différentes voies longitudinales de la grille de foyer.

13. Procédé suivant l'une des revendications 1 à 12, caractérisé en ce que l'un des facteurs est la vitesse d'attisement de toute la grille de foyer.

14. Procédé suivant l'une des revendications 1 à 13, caractérisé en ce que l'un des facteurs est la vitesse d'attisement locale de la grille de foyer.

15. Procédé suivant l'une des revendications 1 à 14, caractérisé en ce que l'un des facteurs est la vitesse d'attisement variable des différentes voies de la grille.
